(19) Europäisches Patentamt
European Patent Office
Office européen des brevets

(11) **EP 3 604 799 A1**

(12) **EUROPEAN PATENT APPLICATION**
published in accordance with Art. 153(4) EPC

(43) Date of publication:
**05.02.2020 Bulletin 2020/06**

(51) Int Cl.:
***F03D 7/04*** *(2006.01)*

(21) Application number: **17908025.4**

(22) Date of filing: **26.04.2017**

(86) International application number:
**PCT/JP2017/016535**

(87) International publication number:
**WO 2018/198225 (01.11.2018 Gazette 2018/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Mitsubishi Electric Corporation Chiyoda-ku Tokyo 100-8310 (JP)**

(72) Inventors:
- **KOTAKE, Nobuki Tokyo 100-8310 (JP)**
- **OTSUKA, Hiroshi Tokyo 100-8310 (JP)**

(74) Representative: **Pfenning, Meinig & Partner mbB Patent- und Rechtsanwälte Joachimsthaler Straße 10-12 10719 Berlin (DE)**

(54) **AI DEVICE, LASER RADAR DEVICE, AND WIND FARM CONTROL SYSTEM**

(57) The conventional wind farm control system has a problem in that it is difficult to obtain information with high spatial resolution and information sufficient for improving machine learning cannot be obtained. An artificial intelligence (AI) system according to the present invention includes: a learning device to perform machine learning on a wind vector, to predict a power generation amount of a wind turbine, and compare the predicted amount with a measured power generation amount, the learning device choosing, when the power difference therebetween is a predetermined threshold value or larger, a laser radar system for measuring the wind vector and then deriving measurement parameters; and a control device to send the measurement parameters derived by the learning device to the laser radar system.

Fig. 3

**Description**

Technical Field

The present invention relates to an AI system, a laser radar system and a wind farm control system.

Background Art

In order to control yaw, pitch and torque of a wind turbine, information obtained by a cup anemometer and a wind vane mounted on the wind turbine is conventionally used. However, wind speeds measured by such measuring instruments mounted at the rear of the wind turbine are those disturbed by the blades, which are not the speeds of true incoming winds and includes errors therein. Since wind speeds and directions are measured after the winds pass the blades, the measurements are made for ever-varying winds, making it impossible to predict winds, which leads to inefficient power generation. To cope with this problem, a radar system that is able to measure the wind direction and speed at a remote location is provided to acquire the information on an approaching wind to control the wind turbine in advance, which makes it possible to increase the electricity generation.

A radar system emits waves such as electromagnetic waves or sound waves into space, receives waves reflected by a target object, and analyzes their signals, to measure the distance and the angle from the radar system to the object. Among radar systems, a weather radar is well known whose target objects are liquid or solid microscopic particles (aerosol) floating in the atmosphere and which can detect the velocity of the aerosol movement, i.e. the wind speed, from the amount of the phase rotation of the reflected waves. Among weather radars, a laser radar that especially uses light as electromagnetic waves is used as a wind speed-direction radar, because the laser radar emits a beam with its width extremely narrowed and thereby is able to observe objects with high angular resolution. Wind vectors are calculated generally through the velocity-azimuth display (VAD) technique or vector calculations etc. by using radial wind velocities in multiple directions.

Such a radar system is used for acquiring wind speed information in an immediate future to thereby increase the wind power generation amount; another method for increasing the wind power generation amount is, as shown in the following Patent Document, to predict future wind information on the basis of machine learning using the weather information on the past and that day.

Prior Art Documents

Patent Documents

Unexamined Patent Application Publication JP, 2007-56686, A

Summary of the Invention

Problems to be Solved by the Invention

However, even when using weather information obtained from an artificial satellite or wind information obtained from a permanently provided mast, their low spatial resolution causes poor prediction accuracy and may reduce the power generation amount instead of increasing the amount. Also, in order that through the machine learning, a wind turbine generates power with high efficiency, a high quality and an abundant amount of the information is inevitably required. To solve the above-mentioned problems, it becomes necessary to measure with high spatial resolution. For example, it is required to construct a lot of masts, but it entails a huge expense.

Another solution may be to adopt a laser radar system capable of long distance measurement.

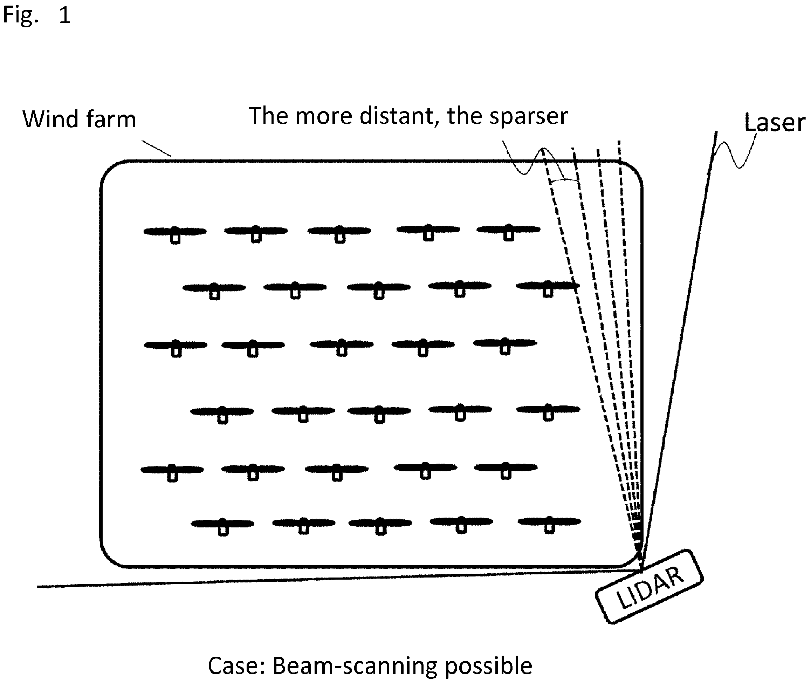

Fig. 1 is a schematic diagram for illustrating the wind condition measurement using a conventional laser radar system capable of long distance measurement. In such a configuration, because its laser beams have high directivity, the distances between the beams become larger as they extend farther.

Also, in a case where shielding objects such as wind turbine blades exist, it is impossible to obtain wind speed values of their backs. Even if the sampling rate for measurement is reduced so as to avoid the shielding objects such as blades, i.e. so as to wait till the blades passes and then measure, the wind fluctuates at every moment, to increase errors in unobserved-area predictions. Ideally, wind speeds should be measured at high resolution and a high sampling rate. However, the above-mentioned shielding objects prevent the observation, and it is required to wait for a next scan. During the waiting, the wind fluctuates, to cause degradation in the measurement accuracy. Also, in a case where measurement is to be made for a large area, it takes a lot of time to scan the area, during which the wind varies, to cause degradation in the measurement accuracy.

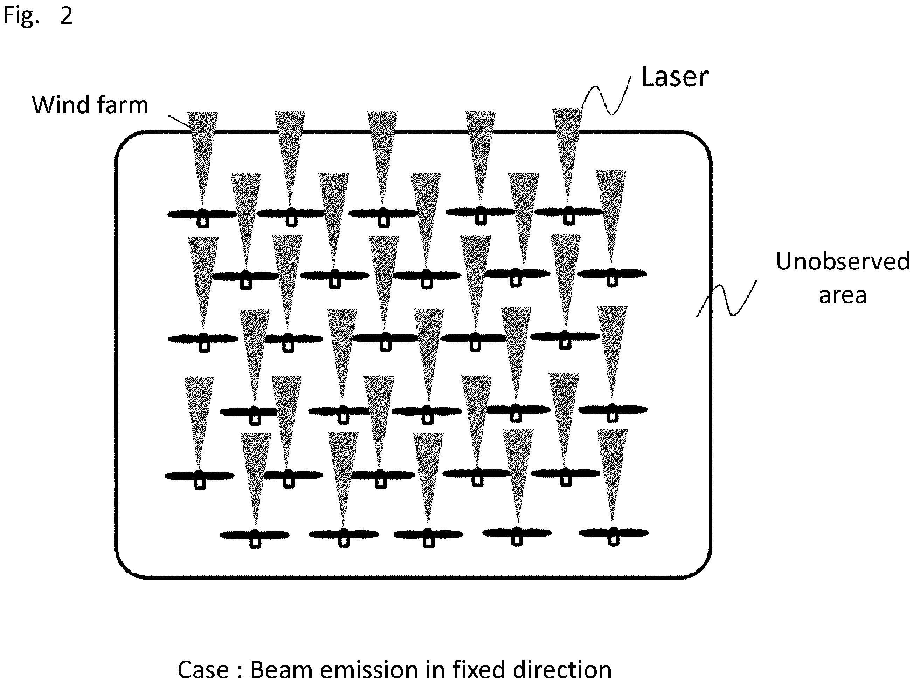

Fig. 2 is a schematic diagram for illustrating wind condition measurement in a case where a conventional laser radar system is installed onto each of the wind turbines. Even in the case where a laser radar system is installed on each of the wind turbines, the laser radar system is fixedly installed and its observation method is fixed, whereby the emission directions of the laser beams are fixed and the observable distances are fixed, to create unobservable areas.

The conventional configuration has a problem in that it is difficult to obtain information with high spatial resolution and it is difficult to obtain information necessary for sufficient learning which improves its machine learning.

Solution to Problems

An artificial intelligence (AI) system according to the present invention includes: a learning device to perform machine learning on a wind vector, to predict a power generation amount of a wind turbine, and compare the predicted amount with a measured power generation amount, the learning device choosing, when the power difference therebetween is a predetermined threshold value or larger, a laser radar system for measuring the wind vector and then deriving measurement parameters; and a control device to send the measurement parameters derived by the learning device to the laser radar system.

Advantages of the Invention

According to the present invention, a high sampling rate is used for observation during large wind turbulence, and the observation area is expanded during small wind turbulence to increase the number of samples and pieces of preliminary information for learning, whereby the accuracy of the machine learning is improved.

Brief Description of the Drawings

Fig. 1 is a schematic diagram for illustrating wind condition measurement using a conventional laser radar system capable of long distance measurement.
Fig. 2 is a schematic diagram for illustrating wind condition measurement in a case where a conventional laser radar system is installed onto each of the wind turbines.
Fig. 3 is a configuration diagram showing an example of a wind farm system according to Embodiment 1 of the present invention.
Fig. 4 is a configuration diagram showing an example of a laser radar system according to Embodiment 1 of the present invention.
Fig. 5 is a configuration diagram showing an example of a signal processor 1010 according to Embodiment 1 of the present invention.
Fig. 6 is a configuration diagram showing an example of a data integration system 2 according to Embodiment 1 of the present invention.
Fig. 7 is a configuration diagram showing an example of an AI system 3 according to Embodiment 1 of the present invention.
Fig. 8 is a map which shows observation results of wind direction-speed conditions in a wind farm according to Embodiment 1 of the present invention.
Fig. 9 is a schematic diagram for illustrating controlling for observing unobserved areas by using the laser radar system according to Embodiment 1 of the present invention.
Fig. 10 is a flow chart showing a procedure for judging unobserved areas and determining measurement areas according to Embodiment 1 of the present invention.

Embodiments

Embodiment 1

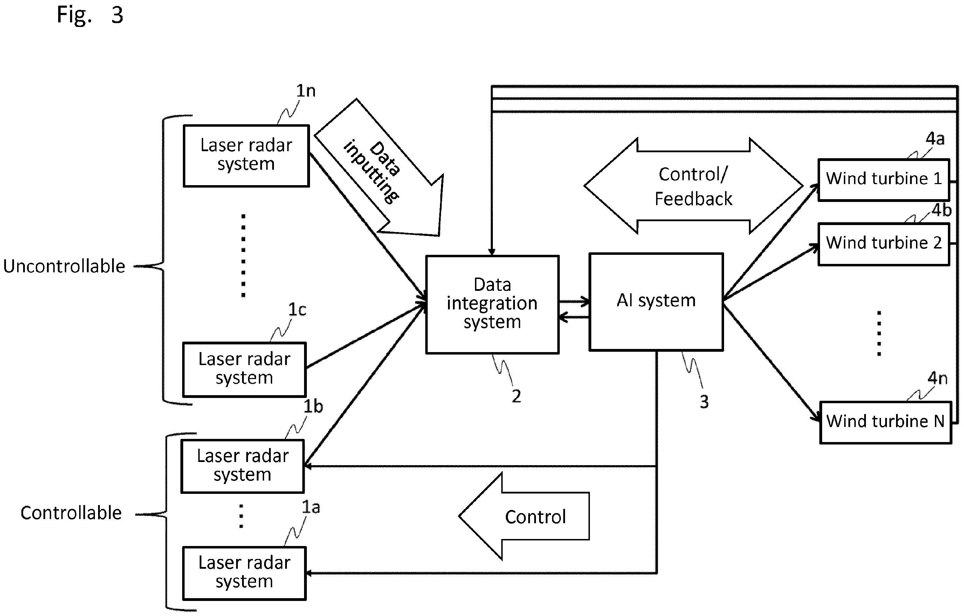

Fig. 3 is a configuration diagram showing an example of a wind farm system according to Embodiment 1 of the present invention.

The wind farm system includes laser radar systems 1a to 1n, a data integration system 2, an artificial intelligence (AI) system 3 and wind turbines 4a to 4n. Note that in the symbols 1a to 1n and 4a to 4n, the alphabet parts denote individual systems and the numeral parts denote the kinds of systems, where components of the same numeral have the same configuration and function. When the elements (1a to 1n) are collectively referred to or when their configuration and function are described, only the numerals are used with the alphabets omitted. Here, a controllable laser radar system (the laser radar systems 1a and 1b) is defined as a laser radar system in which, via a communication means such as a local area network (LAN), a universal serial bus (USB), a controller area network (CAN), RS232C or RS485, the user or a control equipment can change, through the command line etc., the laser radar system's settings for the target distance and target direction as well as the measurement accuracy. Also, an uncontrollable laser radar system (the laser radar systems 1c to 1n) is defined as a laser radar system which continues to use parameters having been set at the start of observation, and cannot change the parameters during the observation.

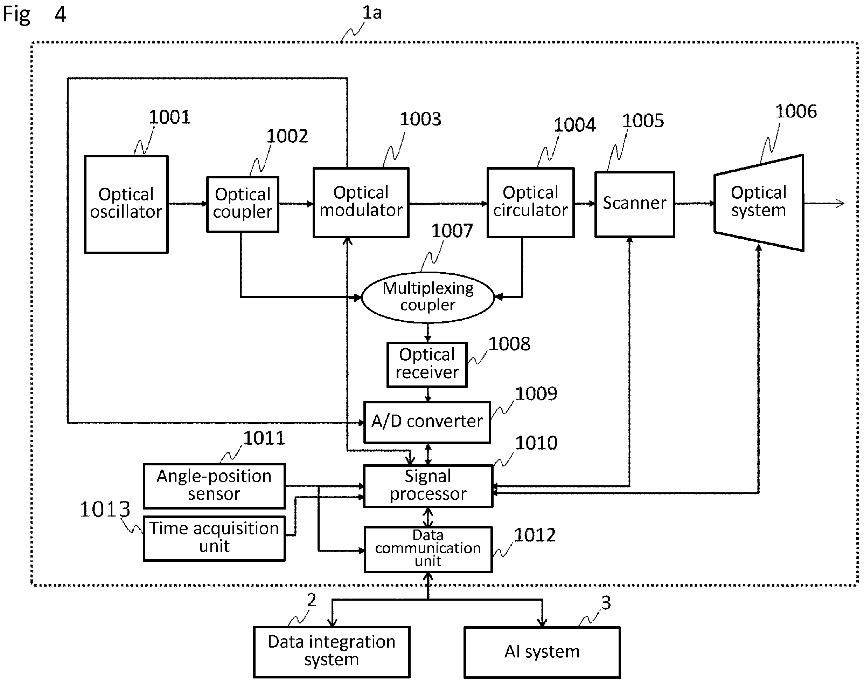

Fig. 4 is a configuration diagram showing an example of a laser radar system according to Embodiment 1 of the present invention.

The laser radar system 1 includes an optical oscillator 1001; an optical coupler 1002; an optical modulator 1003; an optical circulator 1004; a scanner 1005; an optical system 1006; a multiplexing coupler 1007; an optical receiver 1008; an analog to digital (A/D) converter 1009; a signal processor 1010; an angle position sensor 1011; a data communication unit 1012; and a time acquisition unit 1013.

The optical oscillator 1001 produces laser light and outputs the laser light to the optical coupler 1002. The optical oscillator is connected to other devices through the optical coupler. The optical oscillator is connected to the optical coupler by fusion or with an optical connector. In the following description, it is assumed that the devices are connected via optical fibers. Instead of the fiber-connection, space propagation connection may be adopted. For example, a semiconductor laser may be used for the optical oscillator 1001.

The optical coupler 1002 is a splitter to divide, at a given branching ratio, the light outputted from the optical oscillator 1001 into local light (light directed to the optical receiver) and transmission light (light directed to the optical modulator) in order that the subsequent optical receiver will be able to perform heterodyne detection.

The optical modulator 1003 is an optical device to perform light frequency modulation and light intensity modulation on the laser light outputted from the optical coupler 1002. For example, an AO frequency shifter is used for the optical modulator 1003. In this configuration, description is made under an assumption that the laser radar system is a pulse radar system. However, a continuous wave (CW) system may be used. Also, if the outputted light is insufficient, an optical amplifier may be added after the acousto-optic effect (AO) frequency shifter.

The optical circulator 1004 is an optical device to isolate the transmission light being frequency-modulated by the optical modulator 1003 from reception light obtained via the scanner 1005 and the optical system 1006. The transmission direction terminal of the optical circulator is connected to the optical system 1006; the reception direction terminal of the optical circulator is connected to the multiplexing coupler 1007. The connections are performed by fusion or with an optical connector.

The scanner 1005 includes a wedge prism, a motor for rotating the prism, and an encoder. The scanner outputs angle information to the signal processor 10101 while steering the beam at any given angular velocity. For example, a stepping motor with an encoder is used for the motor of the scanner 1005. Besides the above-mentioned scanner configuration, the laser radar system may have a configuration in which an optical switch switches light paths and connects the light paths to respective optical systems having different radial directions, to thereby obtain wind speed values in multiple radial directions. In such a configuration, an optical device such as a mechanical optical switch or a micro-electro-mechanical systems (MEMS) optical switch each of which is also used in communication field, is used for the optical switch.

The optical system 1006 emits the transmission light outputted from the scanner 1005 into the atmosphere and receives light scattered from aerosol as reception light. For example, an optical telescope is used for the optical system 1006.

The multiplexing coupler 1007 multiplexes the local light outputted from the optical coupler 1002 and the reception light outputted from the optical circulator 1004. Either a fused-type coupler or a filter-type coupler is used for the multiplexing coupler 1007.

The optical receiver 1008 performs heterodyne detection on the light multiplexed by the multiplexing coupler 1007. For example, a balanced receiver is used for the optical receiver 1008.

The A/D converter 1009 converts an analog electric signal, which is outputted by the optical receiver 1008 after the optical receiver's heterodyne-detection, into a digital signal in synchronization with a laser pulse trigger signal outputted from the optical modulator 1003.

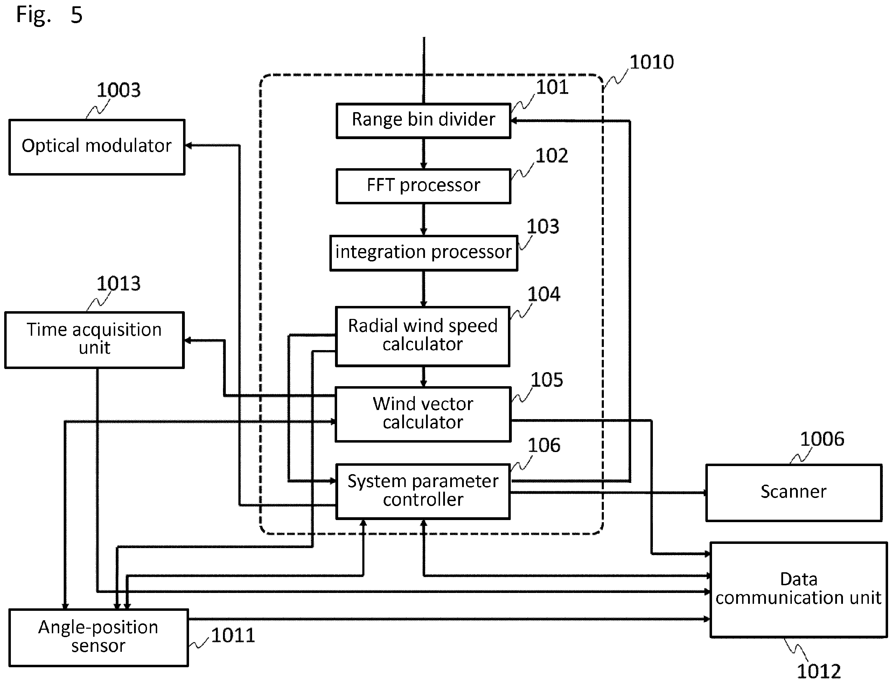

Fig. 5 is a configuration diagram showing an example of a signal processor 1010 according to Embodiment 1 of the present invention.

The signal processor 1010 includes a range bin divider 101, a fast Fourier transform (FFT) processor 102, an integration processor 103, a radial wind speed calculator 104, a wind vector calculator 105, and a system parameter controller 106.

For example, the signal processor 1010 is configured with a field-programmable gate array (FPGA), an application-specific integrated circuit (ASIC), a microcomputer, or the like. The range bin divider 101, the fast Fourier transform (FFT) processor 102, the integration processor 103, the radial wind speed calculator 104, the wind vector calculator 105 and the system parameter controller 106 may be configured with a logic circuit of FPGA or ASIC; or their respective functions may be executed as software, instead.

The range bin divider 101 divides a digital reception signal outputted from the A/D converter 1009 into those corresponding to respective predetermined time ranges (range bins) and output a digital reception signal of each range bin to the FFT processor 102.

The range bin divider 101 divides a digital reception signal outputted from the A/D converter 1009 into those corresponding to respective predetermined time ranges (range bins) and output a digital reception signal of each range bin to the FFT processor 102.

The FFT processor 102 performs Fourier transformation on the reception signal of each range bin outputted from the range bin divider 101 and outputs a signal converted into a spectrum to the integration processor 103. The FFT processor 102 performs Fourier transformation on the reception signal of each range bin outputted from the range bin divider 101 and outputs a signal converted into a spectrum to the integration processor 103.

The integration processor 103 integrates the spectrum signals outputted from the FFT processor 102 over the range bins and outputs the integrated spectrum to the radial wind speed calculator 104. The integration processor 103 integrates the spectrum signals outputted from the FFT processor 102 over the range bins and outputs the integrated spectrum to the radial wind speed calculator 104.

From the spectrum integrated by the integration processor 103, the radial wind speed calculator 104 calculates a Doppler wind speed value, i.e. a radial wind speed value, to output the radial wind speed value and the laser emission direction to the wind vector calculator 105. The radial wind speed calculator notifies the angle position sensor 1011 and the system parameter controller 106 that the radial wind speed value has been obtained.

Using the radial wind speed value data outputted from the radial wind speed calculator 104, the laser emission direction outputted therefrom, and attitude angle information obtained by the angle position sensor 1011, the wind vector calculator 105 calculates a wind vector, to output the calculated wind vector to the data communication unit 1012. Also, the wind vector calculator 105 outputs an electric signal notifying of the completion of the wind vector calculation, to the time acquisition unit, the angle position sensor, and the system parameter controller. The wind vector calculator also outputs the calculated wind vector to the data communication unit 1012. In a case where laser beams are emitted, for example, in two directions, the wind speed of a wind velocity V and the direction thereof can be can be calculated by the formulas below.

[Formula 1]

$$U = \left( \frac{v1}{cos\phi} + \frac{v2}{cos\phi} \right) \cdots (1)$$

[Formula 2]

$$V = \left( \frac{v1}{sin\phi} + \frac{v2}{sin\phi} \right) \cdots (2)$$

[Formula 3]

$$Vw = \sqrt{(U^2 + V^2)} \cdots (3)$$

[Formula 4]

$$Dir = \tan\left(\frac{U}{V}\right) + \delta s \cdots (4)$$

Here, U designates the direction in which a lidar looks; V, the direction perpendicular to U; $\phi$, the spread angle between the laser beam direction and the direction in which the laser radar looks; Vw, the wind speed value; Dir is the wind direction; and 8s, the azimuth outputted from the angle position sensor 1011.

The system parameter controller 106 receives measurement parameters of the laser radar system 1a from the AI system 3 via the data communication unit 1012, to output the received measurement parameters to the optical modulator 1003, the A/D converter 1009, the scanner 1005 and the optical system 1006. The measurement parameters are parameters relating to the laser radar system 1a, such as a pulse width, an A/D time gate-width, a scan direction (equivalent to $\phi$ above-mentioned), a focus length and an emission beam width. When receiving the parameter of the pulse width, the system parameter controller 106 transmits a command to change the pulse shape of the modulation signal; when receiving the parameter of the A/D time gate-width, the system parameter controller outputs an electric signal corresponding to the gate width; when receiving the parameter of the scan direction, the system parameter controller outputs an electric signal corresponding to the angle; and when receiving the parameters of the focus length and the beam width, the system parameter controller outputs electric signals corresponding to arrangement of the optical fiber and the lens.

In a case of no reception signals from the outside, i.e. no information from the AI system 3, the system parameter controller 106 transmits to respective devices, setting signals for the pulse width, the A/D time gate-width, the scan direction, the focus length, and the emission beam width which have been determined by the user's setting or the like.

From then on, the optical modulator 1003, the A/D converter 1009, and the scanner 1005 set their respective parameters in accordance with parameters transmitted from the AI system 3 via the data communication unit 1012.

The angle position sensor 1011 receives an electric signal notifying that the wind vector calculator 105 has completed its calculation, and then outputs attitude angle information of the laser radar system at that moment and position information thereof. For example, the angle position sensor 1011 includes a gyro sensor and a global positioning system (GPS) module.

The data communication unit 1012 transmits a wind vector outputted from the wind vector calculator 105, attitude angle information outputted from the angle position sensor 1011, angle information of the scanner 1005 outputted from the system parameter controller 106, and time information outputted from the time acquisition unit 1013. For example, the data communication unit 1012 is configured with a communication device such as a wired or wireless local area network (LAN) device, a Bluetooth (registered trademark) device, a USB device, or the like.

In response to a calculation processing completion signal outputted from the radial wind speed calculator 104, the time acquisition unit 1013 outputs time to the data communication unit 1012. For the time acquisition unit 1013, a GPS receiver is used, for example.

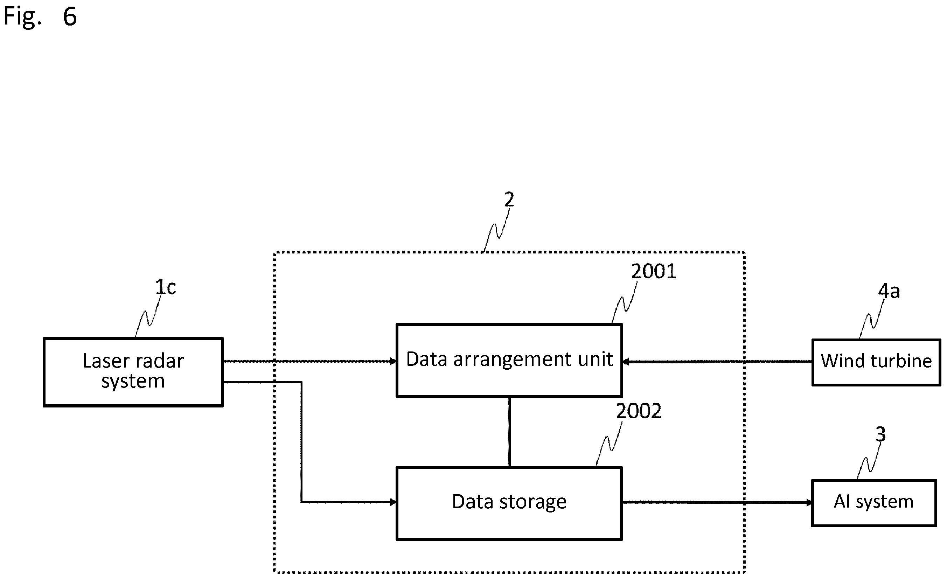

Fig. 6 is a configuration diagram showing an example of a data integration system 2 according to Embodiment 1 of the present invention. The data integration system includes a data arrangement device 2001 and a data storage 2002.

The data arrangement device 2001 receives measurement data from the laser radar systems 1a to 1n and unifies the formats of the received measurement data. To be more specific, the data arrangement device 2001 receives: wind direction-speed values obtained from sensors (laser sensor, cup anemometer, wind vane, radar, sodar, etc.); information on clouds observed by satellites, atmospheric temperature, atmospheric pressure, and weather information which are available from a data cloud server using time information; and wind turbine parameters obtained from wind turbines including, for example, the wind power generation amount, the time of generation, and the roll, pitch, yaw, and torque at the time of generation. And then, the data arrangement device converts the received data into those described in a common coordinate system.

In many cases, the wind velocities and wind directions obtained from respective sensors are data whose coordinate system is based on the due north, the magnetic north or the direction in which the sensor looks. These data are converted into those based on the due north by using, for example, a general rotation matrix, to thereby unify the coordinate systems. Also, in a case where time data based on the coordinated universal time (UTC) reference and time dada based on the japan standard time (JST) reference coexist, the data is converted into that based on the UTC reference. For example, the data arrangement device 2001 is configured with a microcomputer or an FPGA.

The data storage 2002 stores the data converted by the data arrangement device 2001 and outputs deviation values between the data and their theoretical values to a learning device 3001. Each of the deviation values between the data and their theoretical values is the difference between, for example, an instantaneous generation amount at each wind turbine in the wind farm, the temperature, humidity, atmospheric pressure, weather, wind speed and wind direction at its three-dimensional position and their theoretical values. For example, the data storage 2002 includes a hard disk drive (HDD), a solid state drive (SSD), or the like.

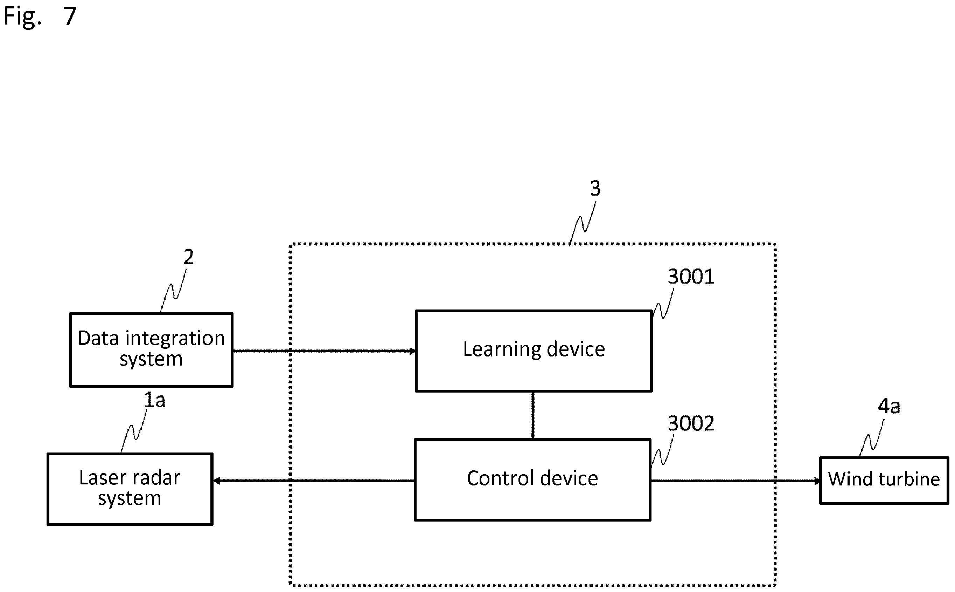

Fig. 7 is a configuration diagram showing an example of the AI system 3 according to Embodiment 1 of the present invention. The AI system 3 includes the learning device 3001 and a control device 3002.

The learning device 3001 receives data which is outputted from the data storage 2002 and which includes: atmospheric condition information such as atmospheric pressure, temperature, humidity and weather; the wind direction-speed values; the wind turbine's attitude; and the wind power generation amount at that moment, and then the learning device uses the data to perform machine learning based on a deep learning method. When receiving the above-mentioned weather information and the wind direction-speed information, the learning device derives the wind turbines' control parameters (torque, pitch, and yaw) with which the power generation efficiency for the entire wind farm will be maximized at that moment. The learning device 3001 outputs electric signals corresponding to the parameters, to the control device 3002. The control device outputs the control signals to the wind turbines.

In addition to the above-mentioned learning, the learning device 3001 finds out, from the data received from the data storage 2002, areas where the data is sparsely obtained, and then outputs control signals to make the laser radar system 1a observe the areas.

The control device 3002 converts the control signals outputted from the learning device 3001 into control commands for the laser radar system to be controlled and sends the converted control commands to the system parameter controller 106 via the data communication unit 1012. Each of the control command is a command to change, for example, the pulse width, the A/D time gate width, the scan direction, the focus length, or the beam width. For example, the control device 3002 is configured with a microcomputer, a personal computer (PC), or the like.

Next, the operation of the wind farm system will be described.

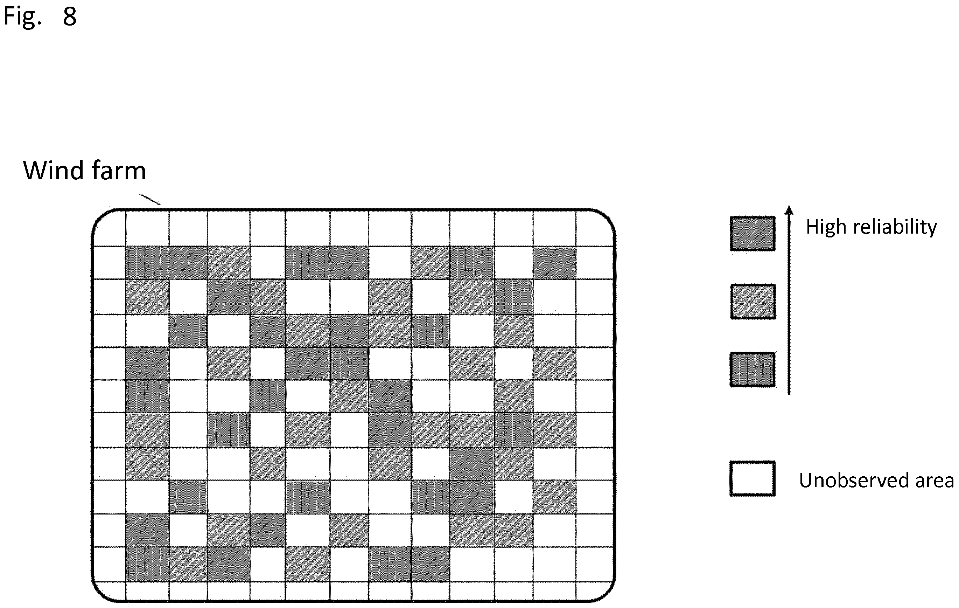

Fig. 8 is a map which shows observation results of wind direction-speed conditions in a wind farm according to Embodiment 1 of the present invention. The map shows the conditions under an assumption that data measured short time ago has high reliability and data measured long time ago has low reliability. For example, in a case where power curve evaluation, which is evaluation of generated-power dependence on incoming winds, is conducted on a one-minute-average basis, data measured half the period ago, i.e. 30 seconds ago, is regarded as low reliability data. The wind turbines are interspersed in the wind farm, with no limitation on their structures. In Fig. 8, the white areas indicate unobserved areas where observation cannot be made under the given arrangement condition of sensors (wind direction anemometer, lidar, radar, sodar, etc.) or under the given observation parameter setting condition. When provided with spatially dense data for the learning, the learning device 3001 in the AI system 3 becomes capable of more accurate prediction.

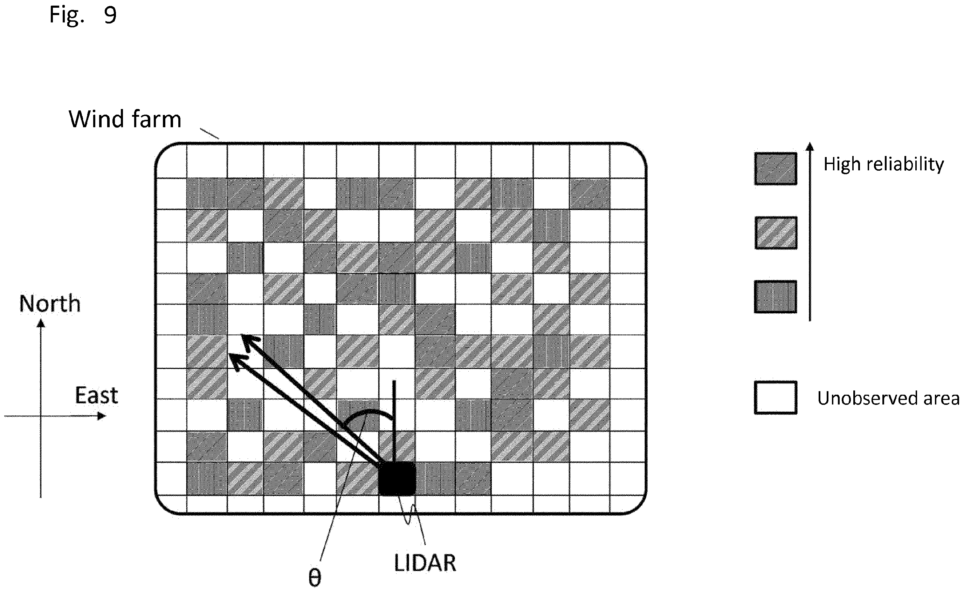

Fig. 9 is a schematic diagram for illustrating controlling for observing unobserved areas by using the laser radar system according to Embodiment 1 of the present invention. In the coordinate system where the due north is set to zero degrees, observation in $-\theta$ direction is performed to observe an area which has not been observed in that direction. In that case, the control device 3002 outputs, to the laser radar system 1, control signals corresponding to the area setting.

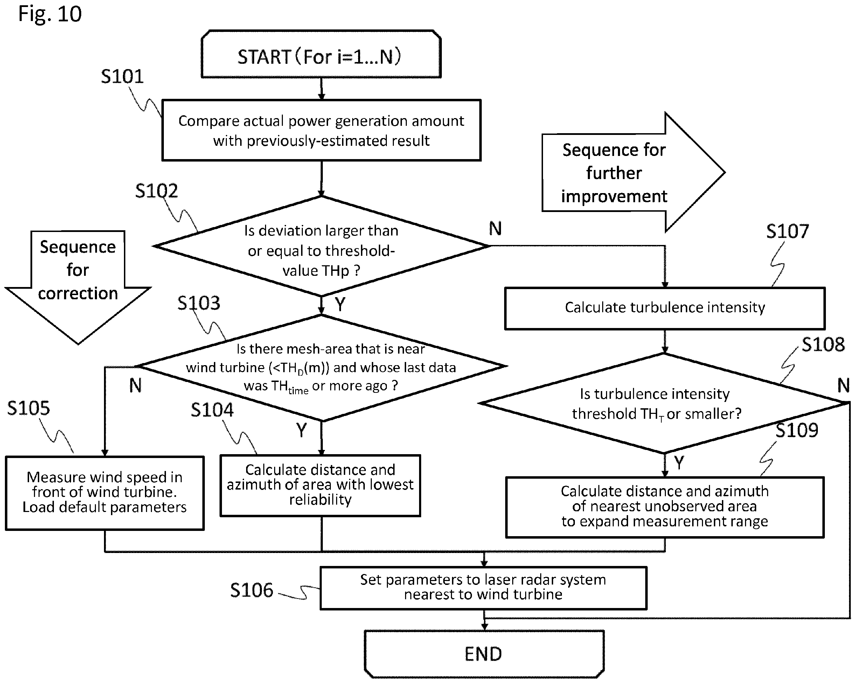

Fig. 10 is a flow chart showing a procedure for judging unobserved areas and determining measurement areas according to Embodiment 1 of the present invention. This processing is performed with respect to each of the wind turbines (4a to 4n). With respect to sensors to be controlled, those of the laser radar system 1a will be used as examples for explanation. Here, the respective wind turbines (4a to 4n) are denoted by i = 1 to N.

First, in Step S101, the AI system 3 calculates, with respect to the wind turbine 4a, the deviation between the previously-estimated power generation amount and its actual power generation amount.

In Step S102, the AI system 3 determines whether the deviation value is larger than a threshold value THp set by the user in advance. When the deviation value is the threshold value THp or larger, i.e. a large difference, the AI system 3 determines that the data being used has a problem in accuracy, and the process proceeds to Step S103. When the deviation is smaller than the threshold value THp, the process proceeds to Step S107.

In Step S103, the AI system 3 searches for, for example, an area whose distance from the wind turbine 4a is within a given distance THD, and whose data was taken a given time $TH_{time}$ ago or therebefore. As a fundamental operation, the entire wind farm area is to be searched, however the areas just after the latest search may be excluded from the search. When an area exists which is within the given distance THD and whose data has been taken the given time $TH_{time}$ ago or therebefore, the process proceeds to Step S104. When such area does not exist, the process proceeds to Step S105. For example, the distance THD is 2.5D (D is the diameter of wind turbine), which is regarded as a distance within which the wind stably blows into the wind turbine. To the time $TH_{time}$, a period of 10 minutes is applied which is used for wind condition evaluations; or, the area's wind speed value which varies with time maybe fitted to $A\sin(\omega t) + B$, to use the value of $\omega$, which corresponds to the period. Instead of fitting, an FFT may be performed directly on the time-varying wind speed, to calculate the period.

In Step S104, the AI system 3 calculates the distance and the azimuth angle to an area with the lowest reliability from among areas which are located within the distance THD and whose data were taken any given $TH_{time}$ ago or therebefore. The flowchart describes the sequence for a single laser radar system to operate in the present embodiment. However, in a case where a plurality of laser radar systems are installed and some or all of them are controlled together, laser radar systems existing within any given distance range (example: 2.5D) from a low reliability area are assigned to observe the area. In the case where two or more laser radar systems exist, each of the laser radar systems is assigned to observe their lowest reliability area which is located within the 2.5D range from their position. The AI system 3 calculates the distance on the basis of the absolute coordinate position of the low reliability area and the coordinate position where the laser radar system is installed; and the AI system calculates, using trigonometric functions, the angle $\theta$ from the due north reference on the basis of these coordinates. There is nothing to be addressed for areas at a distance where reliability is not low.

In Step S105, the AI system 3 calculates default parameters to measure the wind speed in front of the wind turbine, which directly affects the generation amount of the wind turbine. The default parameters are, for example, parameters corresponding to the azimuth angle $\theta = 0$ and the distance 2.5D.

In Step S106, on the basis of the distance and the azimuth angle which were calculated in S104, S105 or S109 for the area to be observed, the AI system 3 calculates parameters (for example, the azimuth angle, the pulse width, the beam width, the focus length, and the number of times of incoherent integration) for the laser radar system 1a to be controlled. Then, the AI system transmits, to the laser radar system 1a, electric signals corresponding to setting values of the parameters. With respect to the azimuth angle, the value calculated in S104, S105 or S109 is used. With respect to other parameters, their calculation methods will be described later.

In a case where Step S102 determines that the deviation value on generation amounts is small, the process proceeds to an improvement sequence (Steps S107 to S109) for making the deviation further small.

In Step S107, the AI system 3 calculates the average turbulence intensity of the entire wind farm or the average turbulence intensity within a 2.5D radius of each wind turbine. The turbulence intensity is expressed as a ratio between the standard deviation of wind speed and the average wind speed.

In Step S108, the AI system 3 determines whether the calculated turbulence intensity is larger than a threshold value THT. When the calculated turbulence intensity is the threshold value THT or lower, the AI system 3 determines that the wind condition is stable, and then the process proceeds to Step S109, to expand the range of measurement. On the other hand, when the calculated turbulence intensity is the threshold value THT or larger, the AI system 3 determines that the wind turbulence is large, to end the process flow and thereby continue observing in a way as before. This is because if the previous observation condition is changed for excessive observations in a situation where the wind speed changes at every moment, it may become impossible to measure the changing wind, thereby incurring a risk of further deviations.

In Step S109, the AI system 3 searches, in the white areas in Fig. 8, for a laser radar system within a given distance range such as a 2.5D range, and then calculates, similarly to Step S104, the distance and the angle $\theta$ from the coordinate position of the area center and the coordinate position of the laser radar system, to proceed to S106. Here, unobserved areas are each defined as an area whose observation was conducted a sufficient time $TH_{timepass}$ ago.

Description will be given below about a method adopted in the AI system 3 for deriving parameters for the laser radar system 1a to measure the distance and the azimuth angle of the unobserved area. In order to derive the parameter values, the formula for circuit calculation is used as shown below, for example.

[Formula 5]

$$SNR = P_{peak} \cdot w \cdot \beta \cdot K \cdot \frac{\eta_F}{\left(1 + \left(1 - \frac{L}{F}\right)^2 \left[\frac{\pi(A_c D)^2}{4\lambda L}\right]^2 + \left(\frac{A_c D}{2S_0}\right)^2\right)} \cdot \left[\frac{\lambda\pi D^2}{8hBL^2}\right]\sqrt{N} \cdots \left(5\right)$$

The symbols of $\beta$, K and $S_O$ designate, respectively, a backscattering coefficient (m$^{-1}$ sr$^{-1}$), an atmospheric transmittance and a coherence diameter (m) of the scattered light, each of which is a parameter representing the atmospheric condition which the system cannot control. On the other hand, the symbols of w(sec), D(m), F(m) and N(times) designate, respectively, a pulse width, a beam width, a focus length and the number of times of incoherent integration, each of which is a parameter which the system can control. The symbols of h, $\lambda$, $P_{peak}$, $\eta$F and B designate, respectively, Planck's constant (Js), a wavelength (m), a pulse peak power of transmission light (W), transmission/reception efficiency in a far field, and a reception bandwidth (Hz). The symbol of Ac designates an approximation coefficient for replacing a Gaussian beam (NGB: Nearest Gaussian Beam) that is suffered from vignetting by the optical antenna with a Gaussian beam which highly correlates to the NGB and is around the diffraction limit. The symbol of L designates a target distance (m). The backscattering coefficient and the atmospheric transmittance may be estimated from the measurement results of the laser radar system 1a closest to the unobserved area; or for these parameters, typical values obtained in advance in the wind farm or the worst values there obtained may be given.

Here, rapid measurement is regarded as important for the AI system 3, so that parameter values of the laser radar system 1a are changed in the prioritized order of the pulse width, the focus length, the beam width and the number of times of incoherent integration.

The pulse width acts like the $P_{peak}$. It is a variable that is able to contribute to SNR most effectively. In order to increase the distance, it is most effective to change the variable. The pulse width can also contribute to enhancing the observation resolution by reducing the pulse width, in other words, by reducing the laser pulse's spatial spread in the radial direction. Thus, the pulse width affects significantly the observation performance of the laser radar system. Therefore, the pulse width's priority is set high.

The focus length is a parameter with which sensitive adjustment can be made for a case where near area measurement with high-accuracy is requested, or a case where distant area measurement is requested instead of near area measurement. In a normal operation, the focus length is adjusted for distant areas. However, in a case where near area measurement is to be performed in accordance with the calculation value of S104 or S109, a high SNR can be achieved for an area at a distance L by adjusting the focus length F = L. Even in an unfavorable environment, the above adjustment increases the possibility of observing the area of the focus point. While changing the pulse width contributes to overall SNR improvement, the focus length adjustment works for determining the SNR to each target distance.

While the pulse width is in a range of several meters, the beam width is generally variable in a range of several centimeters. This width corresponds to the size of the optical system included in the laser radar system. If this variable width is enlarged, the overall size of the system becomes larger. Therefore, under the condition of size limitation, the range to vary is small, thereby necessarily giving a lower priority to this parameter.

The number of times of incoherent integration contributes significantly to SNR, and this parameter directly relates to the sampling rate, as mentioned above. A lower sampling rate lowers the observation accuracy. Thus, the lowest priority is given to the number of times of incoherent integration.

Each parameter has its variable range based on the system design. Therefore, the SNR is calculated in order in cases where the respective parameters are increased, to derive parameters enabling measurement for a given distance. Then, the derived parameters are transmitted to the laser radar system 1a. Also, in order to carry out observation in the direction of the azimuth angle $\theta$, a parameter is transmitted which corresponds to a laser emission direction of the scanner 1005 in the laser radar system 1a. Another configuration for changing the laser emission direction is possible in which a stage is provided at the bottom part of the laser radar system 1a for rotating all sensors. In such a configuration, the rotation angle of the bottom part stage is transmitted to the laser radar system 1a. In the present embodiment, an example has been described in which the AI system 3 calculates the measurement parameters of the laser radar system 1a on the basis of the distance and the azimuth angle of an unobserved area. Instead, the laser radar system 1a may calculate the measurement parameters from the distance and the azimuth angle of an unobserved area obtained by the AI system 3.

Control signals such as command lines for setting the derived parameters of the laser radar system (azimuth angle, pulse width, beam width, focus length, the number of times of incoherent integration) are transmitted to the laser radar system 1a.

Also, the AI system 3 calculates the control parameters (pitch, yaw and torque) of each wind turbine from the wind direction-speed data obtained from the laser radar system 1a and from the deviation information between the power generation amount and its theoretical amount, and then transmits the calculated control parameters to each of the wind turbines 4a through 4n. As so far described, the AI system 3 controls the laser radar system 1a so as to obtain a wide range of wind direction-speed data on the basis of the references of turbulence intensity and reliability, performs machine learning from the wind distribution over the entire wind farm or from the distribution of wind blowing in a three-dimensional space close to each wind turbine, and thereby derives the wind turbine control parameters, to control the wind turbines.

As is obvious from the above description, according to Embodiment 1 of the present invention, data of unobserved areas or low reliability areas is preferentially obtained depending on the situation. This operation autonomously increases data samples to enrich information for the machine learning, thereby further improving the final quantities to be controlled, i.e. the power generation of the wind turbines.

In the present embodiment, determination is performed on individual wind turbine basis, that is, it is performed for estimated power that is generated in each individual wind turbine; however, it is possible for the determination to be performed on the entire wind farm's generated power basis or it may be performed for the sum of the total generated power of two or more wind turbines.

Especially, in a case where the wind turbines in the wind farm are divided into blocks each having, for example, five wind turbines to maximize the wind power generation amount of each block, the signal processing load can be divided into the processing loaded to respective AI systems 3, and thus, the processing speed can be improved. Further, it becomes possible to exclude data of distant areas that has obviously no relation with the wind power generation amount and has bad influences to learning results, thereby improving the quality of the learning results.

In this case, a configuration is allowed in which an integration AI system is introduced at the upstream of the AI systems 3 to set a target generation amount for each block (an area for controlling a plurality of wind turbines) and performs optimization to achieve the block target generation amounts. With respect to the total target generation amount inputted via a communication I/F such as LAN, the integration AI system uses, as inputs, the actual wind generation amounts obtained from the data integration system 2 and the predicted output amounts obtained from the AI systems 3 to calculate deviation amounts in the prediction period and then transmit a target value for each block based on the deviation amounts, to the AI systems 3 via control devices. In the currently operated power transmission system, excessive power generation increases the load of the power supply destination. Therefore, it is necessary to suppress such power generation for stabilization. In the configuration described above, the target amount for each block is individually set in accordance with the wind condition so as to finally satisfy the goal value of the total generation amount. This leads to the stabilization of the power generation.

The integration AI system may be configured so as to stabilize the generation amount of the entire farm by using, as an input, the target generation amount of the entire wind farm instead of the power generation amounts of respective blocks or respective wind turbines. In that case, the integration AI system first determines power generation targets for individual wind turbines to be sent to AI systems for wind turbines and sends the target values to the AI systems as their input. In this story, "one AI system for one wind turbine" requirement is not mandatory. Next, each AI system derives, as its outputs, control parameters for its covering wind turbines for the wind turbines to achieve their power generation targets, whereby the power generation of the entire wind farm is stabilized. In this case, when the user or the power company sets the target generation amounts into the integration AI system, it is possible to configure systems adapted to time slots and environments as needed.

Description of Symbols

1a to 1n: laser radar system, 2: data processor, 3: AI system, 4a to 4n: wind turbine, 1001: optical oscillator, 1002: optical coupler, 1003: optical modulator, 1004: optical circulator, 1005: scanner, 1006: optical system, 1007: multiplexing coupler, 1008: optical receiver, 1009: A/D converter, 1010: signal processor, 1011: angle position sensor, 1012: data communication unit, 1013: time acquisition unit, 101: range bin divider, 102: FFT processor, 103: integration processor, 104: radial wind speed calculator, 105: wind vector calculator, 106: system parameter controller, 2001: data arrangement device, 2002: data storage, 3001: learning device, 3002: control device

**Claims**

1. An artificial intelligence (AI) system comprising:

   a learning device to perform machine learning on a wind vector, to predict a power generation amount of a wind turbine, and compare the predicted amount with a measured power generation amount, the learning device choosing, when the power difference therebetween is a predetermined threshold value or larger, a laser radar system for measuring the wind vector and then deriving measurement parameters; and
   a control device to send the measurement parameters derived by the learning device to the laser radar system.

2. The AI system according to claim 1,

   wherein the learning device checks whether or not an area exists which is located within a predetermined distance from the wind turbine and in which the last wind vector measurement was performed a predetermined time ago or therebefore, and
   wherein when the area exists, the learning device chooses a laser radar system for measuring the area's wind vector and then derives the measurement parameters.

3. The AI system according to claim 1,

   wherein the learning device checks whether or not an area exists which is located within a predetermined distance from the wind turbine and in which the last wind vector measurement was performed a predetermined time ago or therebefore, and
   wherein when the area does not exist, the learning device chooses a laser radar system for measuring a wind vector in front of the wind turbine and then derives default parameters for the chosen laser radar system.

4. The AI system according to claim 1,

   wherein when the difference between the predicted power generation amount and the measured power generation amount is smaller than the threshold value, the AI system calculates a degree of turbulence of the wind vector; and
   wherein when the degree of turbulence is larger than a second threshold value, the AI system calculates a distance to and an azimuth angle of an unobserved area, chooses a laser radar system for measuring the unobserved area and calculates the measurement parameters.

5. The AI system according to claim 2, wherein the learning device changes, in the following order of priority, values of a pulse width, a beam width, a focus length and the number of times of incoherent integration of the laser radar system, calculates signal-to-noise ratios (SNR) in cases where the values are changed, and derives the pulse width, the beam width, the focus length, and the number of times of incoherent integration, as the measurement parameters.

6. A laser radar system comprising:

an optical oscillator to output laser light;

an optical modulator to modulate the laser light outputted from the optical oscillator;

an optical system to output, as transmission light, the laser light modulated by the optical modulator and to receive, as reception light, light reflected by a target object to which the transmission light is outputted;

an optical receiver to perform heterodyne detection on the reception light received by the optical system and to extract a reception signal;

a range bin divider to divide the reception signal into predetermined range bins;

a fast Fourier transform processor to perform Fourier transformation on the reception signals divided by the range bin divider and to calculate spectrums of the reception signals of the range bins;

an integrator to integrate the spectrums for the range bins defined by the range bin divider;

a radial wind speed calculator to calculate a Doppler shift component from the integrated spectrum by the integrator and to calculate a radial wind speed value from the Doppler shift component;

a wind vector calculator to calculate a wind vector by using a plurality of radial wind speed values;

a system parameter controller to set a pulse width for the optical modulator, a beam width of the optical system, a focus length of the optical system, the number of times of incoherent integration at the integrator in accordance with the measurement parameters received from the AI system according to claim 1; and

a data communication unit to transmit, to the AI system, a wind vector obtained by using the pulse width, the beam width, the focus length, and the number of times of incoherent integration.

7. A wind farm control system comprising:

the AI system according to claim 1;

an optical oscillator to output laser light;

an optical modulator to modulate the laser light outputted from the optical oscillator;

an optical system to output, as transmission light, the laser light modulated by the optical modulator and to receive, as reception light, light reflected by a target object to which the transmission light is outputted;

an optical receiver to perform heterodyne detection on the reception light received by the optical system and to extract a reception signal;

a range bin divider to divide the reception signal into predetermined range bins;

a fast Fourier transform processor to perform Fourier transformation on the reception signals divided by the range bin divider and to calculate spectrums of the reception signals of the range bins;

an integrator to integrate the spectrums for the range bins defined by the range bin divider;

a radial wind speed calculator to calculate a Doppler shift component from the integrated spectrum by the integrator and to calculate a radial wind speed value from the Doppler shift component;

a wind vector calculator to calculate a wind vector by using a plurality of radial wind speed values;

a system parameter controller to set a pulse width for the optical modulator, a beam width of the optical system, a focus length of the optical system, the number of times of incoherent integration at the integrator in accordance with the measurement parameters received from the AI system according to claim 1; and

a data communication unit to transmit, to the AI system, a wind vector obtained by using the pulse width, the beam width, the focus length, and the number of times of incoherent integration.

8. A wind farm control system comprising:

the AI system according to claim 2;

an optical oscillator to output laser light;

an optical modulator to modulate the laser light outputted from the optical oscillator;

an optical system to output, as transmission light, the laser light modulated by the optical modulator and to receive, as reception light, light reflected by a target object to which the transmission light is outputted;

an optical receiver to perform heterodyne detection on the reception light received by the optical system and to extract a reception signal;

a range bin divider to divide the reception signal into predetermined range bins;

a fast Fourier transform processor to perform Fourier transformation on the reception signals divided by the range bin divider and to calculate spectrums of the reception signals of the range bins;

an integrator to integrate the spectrums for the range bins defined by the range bin divider;

a radial wind speed calculator to calculate a Doppler shift component from the integrated spectrum by the integrator and to calculate a radial wind speed value from the Doppler shift component;

a wind vector calculator to calculate a wind vector by using a plurality of radial wind speed values;

a system parameter controller to set a pulse width for the optical modulator, a beam width of the optical system, a focus length of the optical system, the number of times of incoherent integration at the integrator in accordance with the measurement parameters received from the AI system according to claim 2; and

a data communication unit to transmit, to the AI system, a wind vector obtained by using the pulse width, the beam width, the focus length, and the number of times of incoherent integration.

9. A wind farm control system comprising:

the AI system according to claim 3;

an optical oscillator to output laser light;

an optical modulator to modulate the laser light outputted from the optical oscillator;

an optical system to output, as transmission light, the laser light modulated by the optical modulator and to receive, as reception light, light reflected by a target object to which the transmission light is outputted;

an optical receiver to perform heterodyne detection on the reception light received by the optical system and to extract a reception signal;

a range bin divider to divide the reception signal into predetermined range bins;

a fast Fourier transform processor to perform Fourier transformation on the reception signals divided by the range bin divider and to calculate spectrums of the reception signals of the range bins;

an integrator to integrate the spectrums for the range bins defined by the range bin divider;

a radial wind speed calculator to calculate a Doppler shift component from the integrated spectrum by the integrator and to calculate a radial wind speed value from the Doppler shift component;

a wind vector calculator to calculate a wind vector by using a plurality of radial wind speed values;

a system parameter controller to set a pulse width for the optical modulator, a beam width of the optical system, a focus length of the optical system, the number of times of incoherent integration at the integrator in accordance with the measurement parameters received from the AI system according to claim 3; and

a data communication unit to transmit, to the AI system, a wind vector obtained by using the pulse width, the beam width, the focus length, and the number of times of incoherent integration.

10. A wind farm control system comprising:

the AI system according to claim 4;

an optical oscillator to output laser light;

an optical modulator to modulate the laser light outputted from the optical oscillator;

an optical system to output, as transmission light, the laser light modulated by the optical modulator and to receive, as reception light, light reflected by a target object to which the transmission light is outputted;

an optical receiver to perform heterodyne detection on the reception light received by the optical system and to extract a reception signal;

a range bin divider to divide the reception signal into predetermined range bins;

a fast Fourier transform processor to perform Fourier transformation on the reception signals divided by the range bin divider and to calculate spectrums of the reception signals of the range bins;

an integrator to integrate the spectrums for the range bins defined by the range bin divider;

a radial wind speed calculator to calculate a Doppler shift component from the integrated spectrum by the integrator and to calculate a radial wind speed value from the Doppler shift component;

a wind vector calculator to calculate a wind vector by using a plurality of radial wind speed values;

a system parameter controller to set a pulse width for the optical modulator, a beam width of the optical system, a focus length of the optical system, the number of times of incoherent integration at the integrator in accordance with the measurement parameters received from the AI system according to claim 4; and

a data communication unit to transmit, to the AI system, a wind vector obtained by using the pulse width, the beam width, the focus length, and the number of times of incoherent integration.

EP 3 604 799 A1

Fig. 1

Wind farm   The more distant, the sparser   Laser

Case: Beam-scanning possible

Fig. 2

Wind farm

Laser

Unobserved area

Case : Beam emission in fixed direction

EP 3 604 799 A1

Fig. 3

EP 3 604 799 A1

**Fig 4**

16

Fig. 5

Optical modulator 1003

Time acquisition unit 1013

Angle-position sensor 1011

Range bin divider 101

FFT processor 102

integration processor 103

Radial wind speed calculator 104

Wind vector calculator 105

System parameter controller 106

1010

Scanner 1006

Data communication unit 1012

EP 3 604 799 A1

17

Fig. 6

Fig. 7

Fig. 8

Wind farm

High reliability

Unobserved area

Fig. 9

Wind farm

North

East

θ

LIDAR

High reliability

Unobserved area

EP 3 604 799 A1

Fig. 10

START (For i=1...N)

S101 — Compare actual power generation amount with previously-estimated result

Sequence for further improvement

S102 — Is deviation larger than or equal to threshold-value THp ?

N

Sequence for correction

S107 — Calculate turbulence intensity

S103 — Is there mesh-area that is near wind turbine ($<TH_D(m)$) and whose last data was $TH_{time}$ or more ago ?

Y

S108 — Is turbulence intensity threshold $TH_T$ or smaller?

N

N

S105 — Measure wind speed in front of wind turbine. Load default parameters

Y

S104 — Calculate distance and azimuth of area with lowest reliability

Y

S109 — Calculate distance and azimuth of nearest unobserved area to expand measurement range

S106 — Set parameters to laser radar system nearest to wind turbine

END

EP 3 604 799 A1

## INTERNATIONAL SEARCH REPORT

| International application No. |
| --- |
| PCT/JP2017/016535 |

### A. CLASSIFICATION OF SUBJECT MATTER
F03D7/04(2006.01)i

According to International Patent Classification (IPC) or to both national classification and IPC

### B. FIELDS SEARCHED

Minimum documentation searched (classification system followed by classification symbols)
F03D7/04

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-211989 A (Mitsubishi Electric Corp.), 15 December 2016 (15.12.2016), (Family: none) | 1-10 |
| A | JP 2016-136001 A (The Chugoku Electric Power Co., Inc.), 28 July 2016 (28.07.2016), (Family: none) | 1-10 |
| A | JP 2004-301116 A (Mitsubishi Electric Corp.), 28 October 2004 (28.10.2004), & US 2004/0183307 A1   & EP 1460266 A2 | 1-10 |
| A | US 2011/0084486 A1 (MITSUBISHI HEAVY INDUSTRIES, LTD.), 14 April 2011 (14.04.2011), & WO 2010/041326 A1   & EP 2333327 A1 | 1-10 |

☐ Further documents are listed in the continuation of Box C.     ☐ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 20 June 2017 (20.06.17) | 27 June 2017 (27.06.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007056686 A